# FASCICULE DE BREVET EUROPEEN

(11) **EP 1 009 005 B1**
(45) Date de publication et mention de la délivrance du brevet: **14.01.2004**
(21) Numéro de dépôt: 99410159.0
(22) Date de dépôt: 16.11.1999
(51) Int. Cl.: H01H 47/02

(54) **Dispositif de commande d'un electro-aimant d'ouverture ou de fermeture d'un disjoncteur, avec commande locale et télécommande**
Einrichtung zur Steuerung eines Elektromagnetes zum Öffnen oder Schliessen eines Schutzschalters, mit lokaler und Fernsteuerung
Control device for an electromagnet for opening or closing a circuit breaker, with local and remote control

(30) Priorité: 07.12.1998 FR 9815556
(43) Date de publication de la demande: 14.06.2000
(73) Titulaire: Schneider Electric Industries SAS, 92500 Rueil-Malmaison (FR)
(72) Inventeur: Chelloug, Mustapha, Schneider Electric Ind. SA, 38050 Grenoble cedex 09 (FR); Durif, Ghislain, Schneider Electric Ind. SA, 38050 Grenoble cedex 09 (FR); Nereau, Jean-Pierre, Schneider Electric Ind. SA, 38050 Grenoble cedex 09 (FR)
(74) Mandataire: Jouvray, Marie-Andrée

(56) Documents cités:
- EP-A- 0 297 957
- FR-A- 2 536 904

## Description

L'invention concerne un dispositif de commande d'un électro-aimant d'ouverture ou de fermeture d'un disjoncteur, dispositif comportant deux bornes d'alimentation et une borne de télécommande.

Les disjoncteurs comportent généralement un certain nombre d'auxiliaires électriques, plus particulièrement des électro-aimants de fermeture (XF) ou d'ouverture, notamment des déclencheurs à émission de courant (MX).

Classiquement, ces dispositifs sont commandés par l'intermédiaire d'un bouton poussoir. Dès que la tension appliquée sur leurs bornes d'alimentation est suffisante, ils provoquent, selon le cas, l'ouverture ou la fermeture du disjoncteur.

Il est possible de télécommander ces dispositifs par l'intermédiaire d'un module de communication, déjà présent dans le disjoncteur et connecté à une borne de télécommande de l'auxiliaire.

Ces deux modes de commande sont jusqu'ici incompatibles, l'auxiliaire télécommandé devant être alimenté en permanence.

L'invention a pour but un dispositif de commande d'un électro-aimant d'ouverture ou de fermeture d'un disjoncteur ne présentant pas ces inconvénients.

Selon l'invention, ce but est atteint par le fait que le dispositif comporte une borne de commande locale et des moyens de détection de présence connectés à au moins une borne de détection de présence et destinés à détecter automatiquement la connexion d'un module de communication aux bornes de télécommande et de détection de présence du dispositif, de manière à pouvoir fonctionner soit selon un premier mode de commande, dans lequel les bornes d'alimentation sont connectées à une source de tension d'alimentation par l'intermédiaire d'un premier organe de commande locale, soit selon un second mode de commande, dans lequel les deux bornes d'alimentation sont connectées directement à la source de tension d'alimentation, la borne de commande locale étant alors connectée, par l'intermédiaire d'un second organe de commande locale, à l'une des bornes d'alimentation et les bornes de télécommande et de détection de présence étant connectées au module de communication.

La simple connexion d'un module de communication au dispositif permet à celui-ci de détecter automatiquement sa présence et de modifier en conséquence son mode de fonctionnement.

Selon un développement de l'invention, le dispositif comporte des moyens pour :
- comparer une grandeur représentative de la tension appliquée aux bornes d'alimentation à un seuil prédéterminé,
- détecter la présence d'un module de communication aux bornes de télécommande et de détection de présence, et
- commander l'excitation d'au moins une bobine de l'électro-aimant lorsque ladite grandeur est supérieure audit seuil, soit automatiquement en l'absence de détection de la présence d'un module de communication, soit, lorsque ladite présence est détectée, si un signal de commande est, de plus, appliqué sur la borne de télécommande ou sur la borne de commande locale.

Selon un premier mode de réalisation, le dispositif comporte une borne de télécommande et deux bornes de détection de présence, les bornes de détection de présence étant court-circuitées par la connexion du module de communication.

Selon un second mode de réalisation, le dispositif comporte une borne de télécommande et de détection de présence, connectée, par l'intermédiaire d'une résistance, à une tension d'alimentation auxiliaire du dispositif, et une borne de référence, la borne de référence et la borne de télécommande et de détection de présence étant connectées par une résistance du module de communication lors de la connexion dudit module auxdites bornes.

D'autres avantages et caractéristiques ressortiront plus clairement de la description suivante de modes particuliers de réalisation, donnés à titre d'exemples non limitatifs et représentés sur les dessins annexés dans lesquels :

Les figures 1 et 2 représentent deux dispositifs de commande d'électro-aimant selon l'art antérieur.

Les figures 3 et 4 représentent deux modes de réalisation particuliers d'un dispositif selon l'invention.

La figure 5 représente un organigramme de fonctionnement d'un dispositif selon l'invention.

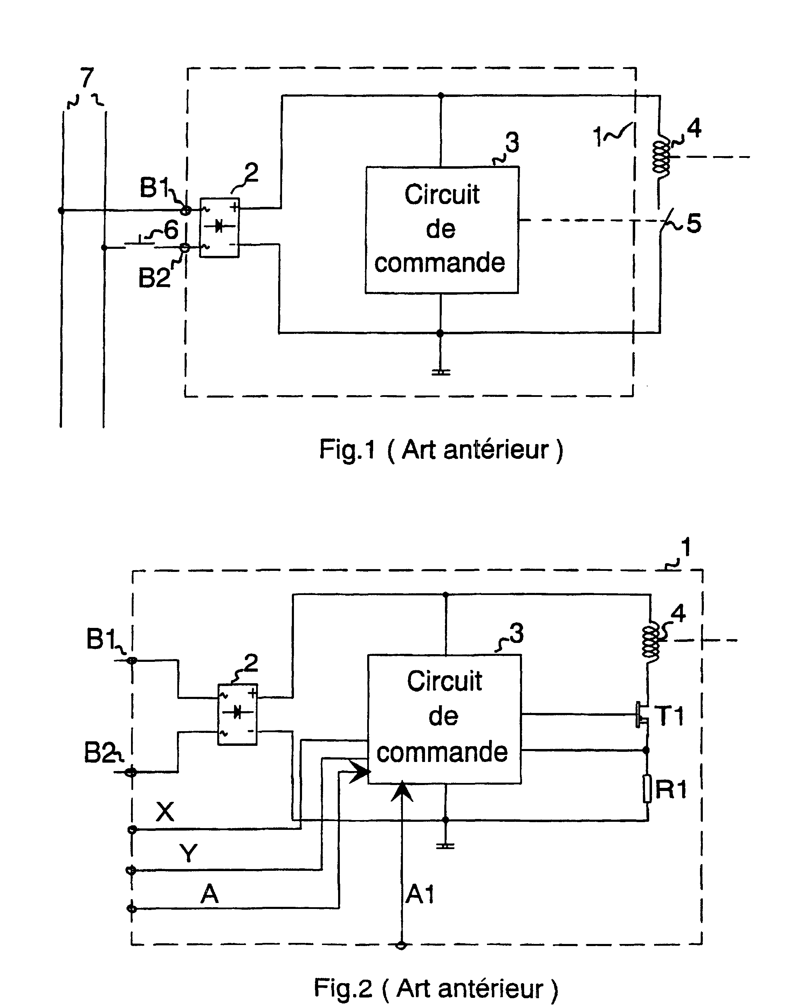

La figure 1 représente un dispositif de commande 1 d'un électro-aimant du type décrit dans la demande de brevet français 2.133.652. Ce dispositif 1 comporte deux bornes d'alimentation B1 et B2 connectées à un redresseur 2 à double alternance, par exemple constitué par un pont de diodes. Les bornes de sortie, en continu, du redresseur alimentent un circuit de commande 3 et une bobine 4 connectée en série avec un interrupteur électronique 5. L'interrupteur 5 est commandé par le circuit de commande 3. La bobine 4 de l'électro-aimant commande l'ouverture ou la fermeture de contacts associés (non représentés) de l'électro-aimant lorsqu'elle est excitée. Les bornes d'alimentation B1 et B2 sont connectées, respectivement directement et par l'intermédiaire d'un interrupteur 6, constitué par un bouton-poussoir sur la figure 1, à un réseau d'alimentation alternatif 7. Lorsque l'interrupteur 6 est fermé, le dispositif de commande 1 est alimenté. Le circuit de commande 3 commande alors la fermeture de l'interrupteur électronique 5 de manière à ce qu'un courant d'appel, relativement élevé, suivi d'un courant de maintien, plus faible, circule dans la bobine 4. Ceci peut être réalisé aussi bien avec un dispositif comportant une seule bobine, dans laquelle le courant est haché pour constituer le courant de maintien, qu'avec un double bobinage constitué par une bobine d'appel et une bobine de maintien.

La figure 2 représente un dispositif de commande d'un contacteur, du type décrit dans la demande de brevet français 2.617.634. Le dispositif de commande 1 comporte, comme le précédent, un redresseur 2 connecté à deux bornes d'alimentation B1 et B2 et un circuit de commande 3 connecté aux bornes de sortie du redresseur. Le circuit de commande 3 contrôle un interrupteur électronique, constitué par un transistor T1, de type MOS, connecté en série avec la bobine 4 et une résistance de mesure R1 aux bornes de sortie du redresseur 2. Les bornes d'alimentation B1 et B2 sont connectées en permanence à une source d'alimentation alternative. Le circuit de commande 3 comporte une borne A d'entrée de commande et deux bornes, X et Y, de sélection du mode de fonctionnement. Deux bits, appliqués sur les bornes X et Y permettent de sélectionner le mode de fonctionnement parmi trois modes possibles :
- fonctionnement autonome, fonction uniquement de l'état du contacteur et de la tension appliquée aux bornes d'alimentation B1 et B2,
- commande à distance, par l'intermédiaire de l'entrée A,
- commande locale par l'intermédiaire de l'entrée A et d'une entrée supplémentaire A1 de réinitialisation.

Les dispositifs de commande des électro-aimants de fermeture (XF) ou d'ouverture (MX) des disjoncteurs sont généralement du type illustré à la figure 1. Il a également été proposé de télécommander de tels auxiliaires, le circuit de commande recevant alors un signal de commande de la part d'un module de communication. Dans le premier cas, seul un fonctionnement autonome est possible, tandis que dans le second cas, seul le fonctionnement télécommandé est prévu.
Selon l'invention, un même auxiliaire doit pouvoir être utilisé soit de façon isolée, dans un mode de commande locale, soit en combinaison avec un module de communication dans un mode de commande locale et/ou à distance.

Le dispositif selon la figure 2 n'est pas approprié car il nécessite au moins trois signaux externes (X, Y, A1) pour déterminer le mode de fonctionnement désiré.

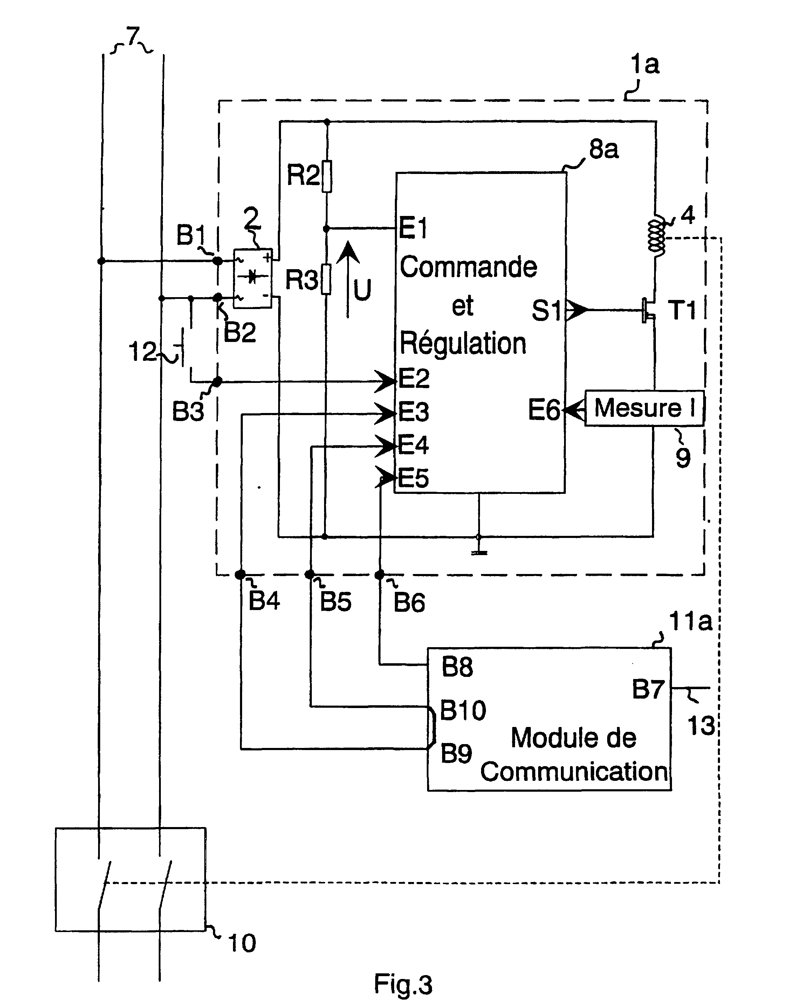

Le mode de réalisation du dispositif de commande la de la figure 3 comporte, comme les précédents, un redresseur 2 connecté à deux bornes d'alimentation B1 et B2. Le redresseur 2 alimente un circuit 8a de commande et de régulation et au moins une bobine 4, connectée en série avec un interrupteur électronique (transistor T1) et un circuit 9 de mesure du courant I circulant dans la bobine 4.

Le circuit de commande et de régulation 8a comporte une première entrée E1 sur laquelle est appliqué un signal U représentatif de la tension appliquée entre les bornes B1 et B2. Sur la figure 3, un diviseur de tension résistif est constitué par deux résistances R2 et R3 connectées en série à la sortie du redresseur 2. Le point milieu du diviseur de tension, commun aux résistances R2 et R3, est connecté à l'entrée E1.

Le circuit 8a comporte quatre autres entrées E2 à E5, respectivement connectées à une borne de commande locale B3 du dispositif 1a, à deux bornes de détection de présence, B4 et B5, et à une borne B6 de télécommande du dispositif de commande 1a. Il comporte également une entrée E6 de régulation, connectée à la sortie du circuit 9 de mesure du courant I, et une sortie S1 de commande, connectée à l'électrode de commande du transistor T1.

Sur la figure 3, la bobine 4 commande l'ouverture d'un disjoncteur 10, connecté aux conducteurs du réseau 7, si l'auxiliaire considéré est un déclencheur à émission de courant (MX) ou sa fermeture s'il s'agit d'un électro-aimant de fermeture (XF).

Si l'auxiliaire doit fonctionner uniquement en mode local, le dispositif de commande 1a est connecté comme sur la figure 1 au réseau 7. L'une de ses entrées d'alimentation, par exemple B1, est connectée directement à l'un des conducteurs du réseau 7, l'autre (B2) étant connectée à l'autre conducteur du réseau par l'intermédiaire d'un interrupteur 6. Dans ce cas, les autres bornes B3 à B6 du dispositif de commande sont inutilisées. La fermeture de l'interrupteur 6 provoque l'excitation de la bobine 4.

Par contre, si l'auxiliaire doit fonctionner en liaison avec un module de communication 11a, les bornes B4 à B6 sont connectées au module 11a et les deux bornes d'alimentation B1 et B2 sont connectées directement au réseau 7, de manière à alimenter en permanence le dispositif 1. Pour permettre également une commande locale, la borne B3 peut être connectée, par l'intermédiaire d'un interrupteur 12 de commande locale, à l'un des conducteurs du réseau 7. En pratique, comme représenté sur la figure 3, la borne B3 est connectée à l'une des bornes d'alimentation (B2 sur la figure) par l'intermédiaire de l'interrupteur 12, constitué par exemple par un bouton-poussoir.

Le module de communication 11a comporte une borne B7 de connexion à un bus 13. Ce bus peut être de tout type connu, par exemple de type JBUS, Batibus, FIP, ....Le module de communication 11a comporte également une borne B8 de télécommande, destinée à être reliée à la borne B6 du dispositif de commande la, et deux bornes B9 et B10 d'indication de présence, destinées à être connectées respectivement aux bornes B5 et B6. Les bornes B9 et B10 sont court-circuitées à l'intérieur du module 11a.

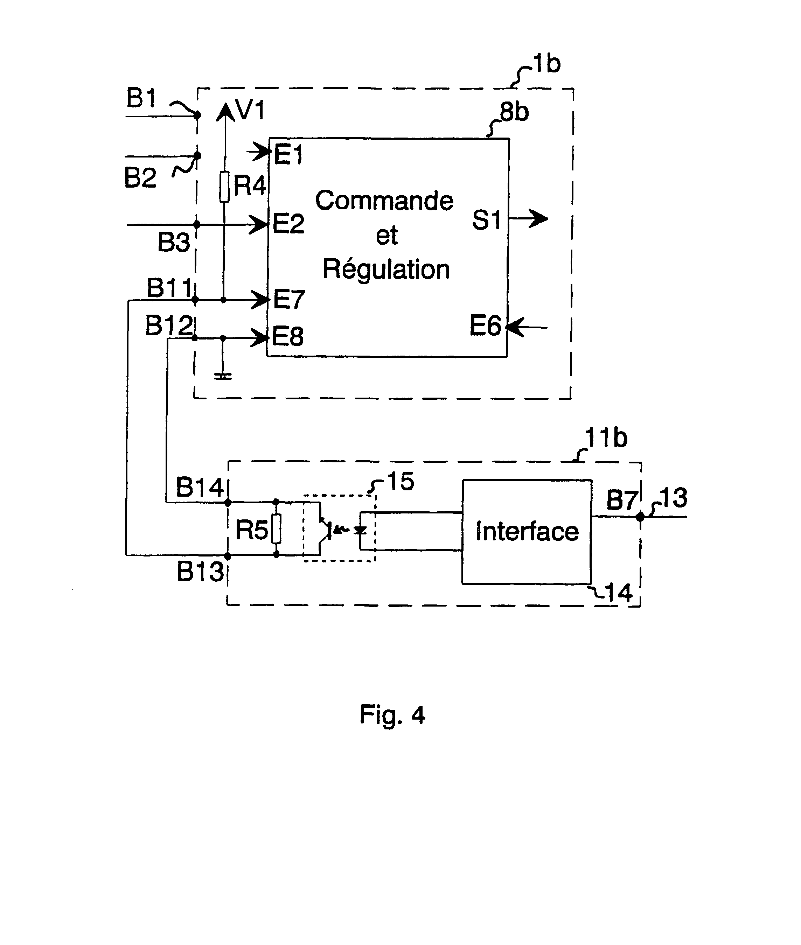

Dans le mode de réalisation particulier de la figure 4, seuls les éléments indispensables à la compréhension sont représentés. Le dispositif de commande 1b comporte toujours deux bornes d'alimentation B1 et B2 et une borne B3 de commande locale. Par contre, il ne comporte plus que deux bornes B11 et B12 de télécommande et de détection de présence, connectées respectivement à des entrées E7 et E8 du circuit de commande et de régulation 8b. L'entrée E8, servant de référence, est connectée à la masse. Les bornes B11 et E7 sont connectées à l'intérieur du dispositif de commande 1b, par l'intermédiaire d'une résistance R4, à une tension d'alimentation auxiliaire V1, par exemple de l'ordre de 5V, obtenue par tout moyen approprié, régulation de tension par exemple, à partir de la tension continue de sortie du redresseur 2.

Le dispositif de commande 1b est destiné à être connecté à un module de communication 11b comportant une borne B7 de connexion à un bus 13 et deux bornes B13 et B14 de télécommande et d'indication de présence, destinée à être connectées respectivement aux bornes B11 et B12. Dans le module 11b, la borne B7 est connectée à une interface 14, elle-même connectée, par l'intermédiaire d'un coupleur électro-optique 15, aux bornes B13 et B14. Une résistance R5 est connectée, en parallèle sur la sortie du coupleur 15, entre les bornes B13 et B14. La partie aval du coupleur 15 du module de communication 11b est alimentée par la tension V1 du dispositif de commande 1b.

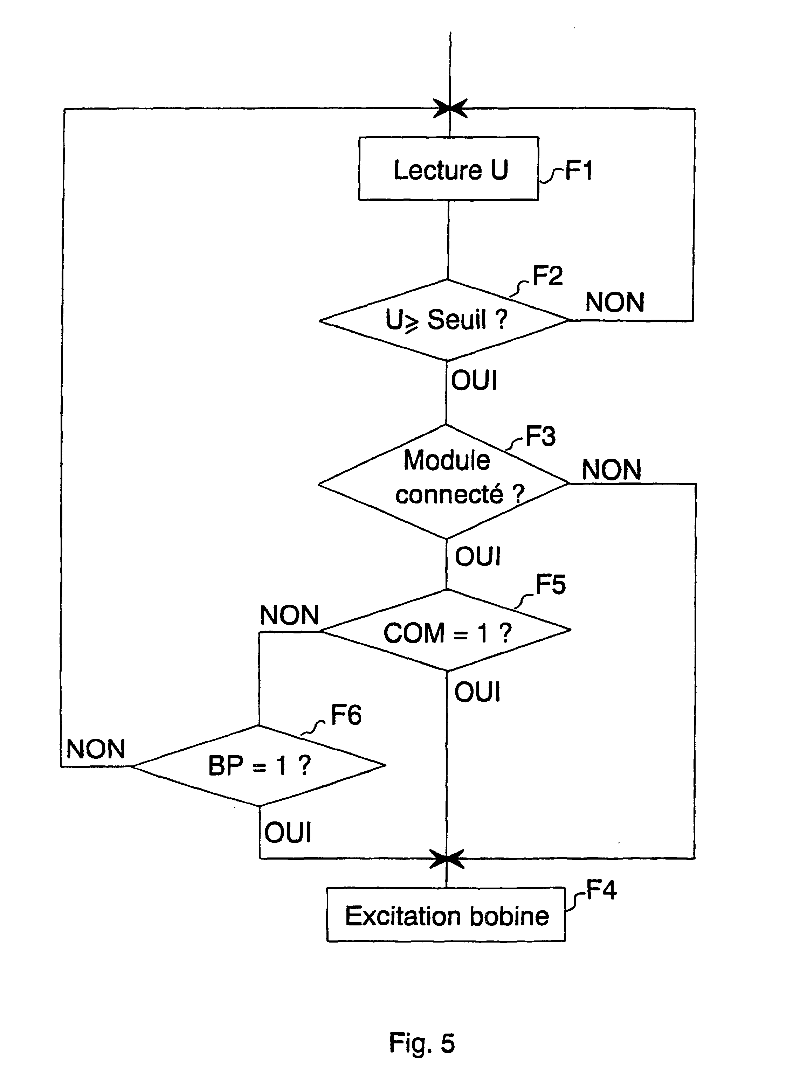

Les dispositifs de commande 1a et 1b fonctionnent de la manière décrite ci-dessous en référence à la figure 5 qui représente un organigramme de fonctionnement d'un microprocesseur faisant partie des circuits 8a et 8b.

Dans une première étape F1 le microprocesseur du circuit de commande et de régulation, 8a ou 8b, lit la tension U appliquée à l'entrée E1. Cette tension U, représentative de la tension aux bornes de la résistance R3 est en fait représentative de la tension appliquée au bornes d'alimentation B1 et B2. Dans une seconde étape F2, le microprocesseur compare la tension U à un seuil prédéterminé représentatif d'un seuil de tension d'appel. Si la tension U est inférieure au seuil (sortie NON de F2) le microprocesseur se reboucle sur l'étape F1. Par contre, si la tension U est égale ou supérieure au seuil, le microprocesseur passe à une étape F3. Dans l'étape F3 il vérifie si un module de communication est connecté au dispositif de commande 1a ou 1b.

Dans le mode de réalisation de la figure 3, la présence du module de communication 11a est détectée lorsqu'il y a un court-circuit entre les bornes E3 et E4, respectivement connectées aux bornes B4 et B5 du dispositif la et aux bornes B9 et B10 du module de communication 11a. Dans le mode de réalisation de la figure 4, la présence du module de communication 11b est détectée lorsque la tension appliquée à l'entrée E7 prend une certaine valeur prédéterminée. Si les résistances R4 et R5 sont égales, en l'absence du module 11b, la tension appliquée à l'entrée E7 est égale à V1. Par contre, en présence du module 11b, cette tension est égale à V1/2. Il est à noter que dans ce cas, les signaux de communication appliqués par le module de communication 11b au circuit 8b peuvent prendre deux valeurs logiques, correspondant respectivement à la tension V1/2 lorsque le coupleur 15 est inactif et à la tension 0 lorsque le coupleur 15 est actif, court-circuitant la résistance R5 et, en conséquence, les bornes B13 et B14. La borne B12 sert ainsi de borne de référence pour la borne B11 qui est utilisée à la fois comme borne de télécommande et comme borne de détection de présence.

En l'absence de détection de la connexion d'un module de communication au dispositif de commande (sortie NON de F3), c'est à dire si les entrées E3 et E4 ne sont pas court-circuitées (fig. 3) ou si la tension appliquée entre les entrées E7 et E8 est égale à V1, le microprocesseur passe à une étape F4 d'excitation de la bobine. Cette étape peut se faire de toute manière appropriée, connue, par exemple par excitation de la bobine par un courant d'appel, relativement élevé, pendant un certain temps, puis par un courant de maintien plus faible. Ceci peut être réalisé aussi bien avec un dispositif comportant une seule bobine, dans laquelle le courant est haché pour constituer le courant de maintien, qu'avec un double bobinage constitué par des bobines d'appel et de maintien distinctes.

Ce fonctionnement correspond alors au fonctionnement classique, en mode purement local, d'un dispositif de commande d'un électro-aimant d'ouverture ou de fermeture d'un disjoncteur. En l'absence de module de communication, une tension suffisante est en effet appliquée aux bornes d'alimentation B1 et B2 lorsqu'un interrupteur de commande locale 6 disposé en amont de l'une des bornes B1 et B2 est fermé.

Lorsque le microprocesseur détecte la présence d'un module de communication (sortie OUI de F3) il passe à une étape F5 où il vérifie s'il reçoit un ordre de télécommande (COM =1). Dans le mode de réalisation de la figure 3, un tel ordre est appliqué à l'entrée E5 par l'intermédiaire des bornes B6 et B8. Dans le mode de réalisation de la figure 4, un tel ordre est constitué par exemple, par l'application d'un court-circuit entre les entrées E7 et E8 provoqué par une activation du coupleur 15. Bien entendu, un tel ordre peut, dans les deux modes de réalisation, être également constitué par une suite de bits plutôt que par un seul bit.

Si un ordre de télécommande est reçu (sortie OUI de F5), le microprocesseur passe à l'étape F4 d'excitation de la bobine. Par contre, en l'absence d'un ordre de télécommande (sortie NON de F5), le microprocesseur vérifie, dans une étape F6, si un ordre de commande locale (BP=1) est appliqué au dispositif. Dans les modes de réalisation représentés, un tel ordre est appliqué au dispositif lorsque l'interrupteur de commande locale 12 est fermé. Si un tel ordre est appliqué (sortie OUI de F6), le microprocesseur passe à l'étape F4 d'excitation de la bobine. Sinon (sortie NON de F6), il revient à l'étape **F1**.

Les étapes F5 et F6 peuvent être interverties sans modifier le fonctionnement de l'ensemble. L'essentiel est que, lorsqu'un module de communication (11a, 11b) est connecté, le dispositif prenne automatiquement en compte à la fois les ordres de télécommande et les ordres de commande locale éventuels. La vérification préalable de la valeur de la tension U permet de ne prendre en compte un tel ordre que lorsque la tension appliquée aux bornes d'alimentation est suffisante pour assurer un fonctionnement correct de l'électro-aimant.

Le dispositif de commande selon l'invention peut ainsi fonctionner soit de façon autonome en mode local, soit lorsqu'il est connecté à un module de communication dans un mode local et/ou à distance. Dans le fonctionnement autonome en mode local, la fermeture d'un interrupteur de commande locale provoque automatiquement l'alimentation du dispositif par les bornes d'alimentation, B1 et B2, et l'excitation de l'électro-aimant. Dans le fonctionnement avec module de communication, le dispositif est alimenté en permanence par ses bornes d'alimentation B1 et B2 et peut être commandé soit localement soit à distance. Le simple câblage du module de communication au dispositif de commande permet à celui-ci de détecter la présence du module de communication et de savoir qu'il ne doit pas fonctionner de manière autonome mais provoquer un actionnement de l'électro-aimant uniquement à réception d'un ordre de télécommande ou d'un ordre de commande locale, sous réserve que la tension d'alimentation soit suffisante pour assurer un fonctionnement correct de l'électro-aimant.

Dans les modes de réalisation décrits ci-dessus, l'interrupteur de commande locale est constitué par un interrupteur, par exemple de type bouton-poussoir. L'invention s'applique également au cas où cette commande est réalisée par d'autres moyens, par exemple par une sortie d'automate programmable, qui peut être constituée par un opto-coupleur. Le terme local ne signifie pas que l'interrupteur de commande locale est obligatoirement disposé à proximité physique du dispositif de commande. Il est utilisé par opposition à la télécommande par l'intermédiaire d'un module de communication. L'organe de commande locale (6 ou 12) permet de connecter, ou non, par câblage, une source d'alimentation aux bornes d'alimentation B1 ou B2 ou à la borne de commande locale B3. Les organes 6 et 12 peuvent éventuellement être physiquement disposés à distance (plusieurs kilomètres) du dispositif.

Sur les figures ci-dessus le réseau d'alimentation est un réseau alternatif. L'invention s'applique également dans le cas où le dispositif de commande est alimenté en courant continu, le redresseur 2 devenant alors inutile.

## Revendications

1. Dispositif de commande d'un électro-aimant d'ouverture ou de fermeture d'un disjoncteur, dispositif comportant deux bornes d'alimentation (B1, B2) et une borne de télécommande, dispositif **caractérisé en ce qu'**il comporte une borne (B3) de commande locale et des moyens de détection de présence connectés à au moins une borne de détection de présence et destinés à détecter automatiquement la connexion d'un module de communication (11a, 11b) aux bornes (B4 à B6, B11, B12) de télécommande et de détection de présence du dispositif, de manière à pouvoir fonctionner soit selon un premier mode de commande, dans lequel les bornes d'alimentation (B1, B2) sont connectées à une source (7) de tension d'alimentation par l'intermédiaire d'un premier organe (6) de commande locale, soit selon un second mode de commande, dans lequel les deux bornes d'alimentation (B1, B2) sont connectées directement à la source (7) de tension d'alimentation, et dans lequel la borne de commande locale (B3) étant alors connectée, par l'intermédiaire d'un second organe (12) de commande locale, à l'une (B2) des bornes d'alimentation, et dans lequel la commande d'ouverture ou de fermeture du disjoncteur est exécutée soit par le second organe (12) de commande locale, soit par une commande du module de communication (11a, 11b).

2. Dispositif selon la revendication 1, **caractérisé en ce qu'**il comporte des moyens (8a, 8b) pour :
- comparer (F2) une grandeur (U) représentative de la tension appliquée aux bornes d'alimentation (B1, B2) à un seuil prédéterminé,
détecter (F3) la présence d'un module de communication (11a, 11b) aux bornes (B4 à B6 ; B11, B12) de télécommande et de détection de présence, et
- commander (F4) l'excitation d'au moins une bobine (4) de l'électro-aimant lorsque ladite grandeur (U) est supérieure audit seuil, soit automatiquement en l'absence de détection de la présence d'un module de communication (11a, 11b), soit, lorsque ladite présence est détectée, si un signal de commande (COM, BP) est, de plus, appliqué sur la borne de télécommande (B6, B11) ou sur la borne (B3) de commande locale.

3. Dispositif selon la revendication 2, **caractérisé en ce qu'**il comporte un diviseur de tension résistif (R2, R3) connecté aux bornes d'alimentation (B1, B2) et comportant un point milieu connecté à une entrée (E1) d'un circuit à microprocesseur comportant lesdits moyens (8a, 8b) de comparaison, de détection de présence et de commande.

4. Dispositif selon l'une quelconque des revendications 1 à 3, **caractérisé en ce qu'**il comporte une borne de télécommande (B6) et deux bornes (B4, B5) de détection de présence, les bornes de détection de présence étant court-circuitées par la connexion du module (11a) de communication.

5. Dispositif selon l'une quelconque des revendications 1 à 3, **caractérisé en ce qu'**il comporte une borne (B11) de télécommande et de détection de présence, connectée, par l'intermédiaire d'une résistance (R4), à une tension d'alimentation auxiliaire (V1) du dispositif (1b), et une borne (B12) de référence, la borne (B12) de référence et la borne (B11) de télécommande et de détection de présence étant connectées par une résistance (R5) du module de communication (11b) lors de la connexion dudit module auxdites bornes (B11, B12).

## Claims

1. A control device of a circuit breaker opening or closing electromagnet, device comprising two power supply terminals (B1, B2) and a remote control terminal, device **characterized in that** it comprises a local control terminal (B3) and presence detection means connected to at least one presence detection terminal and designed to automatically detect connection of a communication module (11A, 11b) to the remote control and presence detection terminals (B4 to B6, B11, B12) of the device, so as to be able to operate either according to a first control mode, wherein the power supply terminals (B1, B2) are connected to a voltage supply source (7) by means of a first local control means (6), or according to a second control mode, wherein the two power supply terminals (B1, B2) are connected directly to the voltage supply source (7), and wherein the local control terminal (B3) is then connected by means of a second local control means (12) to one (B2) of the power supply terminals and wherein the circuit breaker opening or closing order is executed either by the second local control means (12) or by a command from the communication module (11a, 11b).

2. Device according to claim 1, **characterized in that** it comprises means (8a, 8b) for:
- comparing (F2) a quantity (U) representative of the voltage applied to the power supply terminals (B1, B2) with a preset threshold,
- detecting (F3) the presence of a communication module (11a, 11b) at the remote control and presence detection terminals (B4 to B6; B11, B12), and
- commanding (F4) excitation of at least one coil (4) of the electromagnet when said quantity (U) is greater than said threshold, either automatically in the absence of detection of presence of a communication module (11a, 11b), or, when said presence is detected, if a control signal (COM, BP) is, in addition, applied to the remote control terminal (B6, B11) or to the local control terminal (B3).

3. Device according to claim 2, **characterized in that** it comprises a resistive voltage divider (R2, R3) connected to the power supply terminals (B1, B2) and comprising a mid-point connected to an input (E1) of a microprocessor-based circuit comprising said means (8a, 8b) for comparing, detecting presence and controlling.

4. Device according to any one of the claims 1 to 3, **characterized in that** it comprises a remote control terminal (B6) and two presence detection terminals (B4, B5), the presence detection terminals being short-circuited by connection of the communication module (11a).

5. Device according to any one of the claims 1 to 3, **characterized in that** it comprises a remote control and presence detection terminal (B11) connected by means of a resistor (R4) to an auxiliary voltage supply (V1) of the device (1b), and a reference terminal (B12), the reference terminal (B12) and remote control and presence detection terminal (B11) being connected by a resistor (R5) of the communication module (11b) when connection of said module to said terminals (B11, B12) is performed.

## Patentansprüche

1. Einrichtung zur Betätigung eines Ausschalt- oder eines Einschalt-Elektromagneten eines Leistungsschalters, welche Einrichtung zwei Stromversorgungsklemmen (B1, B2) und eine Fernbetätigungsklemme umfaßt und **dadurch gekennzeichnet ist, daß** sie eine Vorortbetätigungsklemme (B3) sowie an mindestens eine Belegungsnachweisklemme angeschlossene Belegungsnachweismittel zur automatischen Erkennung des Anschlusses eines Kommunikationsmoduls (11a, 11b) an die Fernbetätigungs- und Belegungsnachweisklemmen (B4 bis B6, B11, B12) der Einrichtung umfaßt, derart daß die Einrichtung entweder in einem ersten Betätigungsmodus, in dem die Stromversorgungsklemmen (B1, B2) über ein erstes Vorortbetätigungsorgan (6) mit einer Versorgungsspannungsquelle (7) verbunden werden, oder in einem zweiten Betätigungsmodus betrieben werden kann, in dem die beiden Stromversorgungsklemmen (B1, B2) direkt mit der Versorgungsspannungsquelle (7) und die Vorortbetätigungsklemme (B3) über ein zweites Vorortbetätigungsorgan (12) mit einer (B2) der Stromversorgungsklemmen verbunden sind und in dem die Ausschalt- bzw. Einschaltsteuerung des Leistungsschalters entweder durch das zweite Vorortbetätigungsorgan (12) oder durch einen Steuerbefehl des Kommunikationsmoduls (11a, 11b) erfolgt.

2. Einrichtung nach Anspruch 1, **dadurch gekennzeichnet, daß** sie Mittel (8a, 8b)
- zum Vergleich (F2) einer die Spannung an den Stromversorgungsklemmen (B1, B2) abbildenden Größe (U) mit einem festgelegten Schwellwert,
- zur Erkennung (F3) der Belegung der Fernbetätigungs- und Belegungsnachweisklemmen (B4 bis B6; B11, B12) mit einem Kommunikationsmodul (11a, 11b) sowie
- zur Steuerung (F4) der Erregung mindestens einer Spule (4) des Elektromagneten umfaßt, wenn die genannte Größe (U) über dem genannten Schwellwert liegt, wobei die Erregung entweder bei fehlendem Belegungsnachweis eines Kommunikationsmoduls (11a, 11b) automatisch oder bei Nachweis der genannten Belegung dann erfolgt, wenn außerdem ein Betätigungssignal (COM, BP) an der Fernbetätigungsklemme (B6, B11) oder an der Vorortbetätigungsklemme (B3) ansteht.

3. Einrichtung nach Anspruch 2, **dadurch gekennzeichnet, daß** sie einen an die Stromversorgungsklemmen (B1, B2) angeschlossenen ohmschen Spannungsteiler (R2, R3) mit einem Mittelanschluß umfaßt, der mit einem Eingang (E1) einer die genannten Vergleichs-, Belegungsnachweis- und Steuermittel (8a, 8b) enthaltenden Mikroprozessorschaltung verbunden ist.

4. Einrichtung nach irgendeinem der Ansprüche 1 bis 3, **dadurch gekennzeichnet, daß** sie eine Fernbetätigungsklemme (B6) und zwei Belegungsnachweisklemmen (B4, B5) umfaßt, wobei die Belegungsnachweisklemmen durch den Anschluß des Kommunikationsmoduls (11a) kurzgeschlossen werden.

5. Einrichtung nach irgendeinem der Ansprüche 1 bis 3, **dadurch gekennzeichnet, daß** sie eine Fernbetätigungs- und Belegungsnachweisklemme (B11), die über einen Widerstand (R4) mit einer Hilfsversorgungsspannung (V1) der Einrichtung (1b) verbunden ist, sowie eine Bezugsklemme (B12) umfaßt, wobei die Bezugsklemme (B12) und die Fernbetätigungsund Belegungsnachweisklemme (B11) bei Anschluß des genannten Moduls an die genannten Klemmen (B11, B12) über einen Widerstand (R5) des Kommunikationsmoduls (11b) verbunden werden.
